(19) Europäisches Patentamt

European Patent Office

Office européen des brevets

(11) **EP 1 148 504 A1**

(12) **EUROPEAN PATENT APPLICATION**

(43) Date of publication:
**24.10.2001 Bulletin 2001/43**

(51) Int Cl.⁷: **G11B 27/30**, G11B 27/10

(21) Application number: **01107337.6**

(22) Date of filing: **24.03.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **08.04.2000 EP 00250120**

(71) Applicant: **DEUTSCHE THOMSON-BRANDT GMBH**
**78048 Villingen-Schwenningen (DE)**

(72) Inventors:
• **Klausberger, Wolfgang**
  **30880 Laatzen (DE)**
• **Ostermann, Ralf**
  **30167 Hannover (DE)**
• **Pieper, Michael**
  **30659 Hannover (DE)**
• **Timmermann, Friedrich**
  **30823 Garbsen (DE)**

(74) Representative: **Hartnack, Wolfgang, Dipl.-Ing.**
**Deutsche Thomson-Brandt GmbH**
**European Patent Operations**
**Karl-Wiechert-Allee 74**
**30625 Hannover (DE)**

(54) **Method and apparatus for recording/replaying transport stream data packets on a storage medium**

(57) MPEG2 data streams contain data packets for a set of programs and time stamps for data synchronisation purposes. An MPEG2 transport stream is assembled of fixed-length transport packets. The received transport packets of at least one specific program of this set of programs can be stored using for example a DVD Streamer recorder or DVD-RAM recorder. For the real-time playback of recorded specific program data packets each packet needs a separate time stamp. For that reason a timestamp is to be captured for each data packet at recording time. However, capturing of timestamps from a transport stream is a very time consuming action in software implementation processing. Therefore transport stream timestamps are captured for every Nth packet only and the missing timestamps are calculated. Thereby software-processing time is saved for generating the timestamps required for real-time bit-stream recording.

**Fig.2**

EP 1 148 504 A1

**Description**

The invention relates to a method and to an apparatus for recording on a storage medium, or replaying from a storage medium, data packets of a transport stream which data packets belong to at least one specific of several programs contained in said transport stream.

<u>Background</u>

MPEG2 data streams contain time stamps for data synchronisation purposes and for determining in a decoder the presentation time and/or the decoding time for video and/or audio data. An MPEG2 transport stream carries several programs and is assembled of corresponding fixed-length transport packets for these programs.

<u>Invention</u>

A specific MPEG2 program can be received by a DVB (digital video broadcasting) receiver, e.g. a settop box, or an ATSC (advanced television system committee) receiver, e.g. a digital TV receiver. The data packets of that specific program can be recorded on an optical medium using for example a DVD Streamer recorder or DVD-RAM recorder. For the real-time playback of recorded data packets - for instance MPEG2 transport packets according to the DVB-S standard - each packet needs separate time information, i.e. a packet time stamp. For that reason a timestamp is to be captured for each data packet at recording time. However, capturing of timestamps from a transport stream is a very time consuming action in software implementation processing.
A problem to be solved by the invention is to provide in a processing time - in particular software-processing time - saving manner timestamps required for data packet recording or replaying. This problem is solved by the method disclosed in claim 1.
An apparatus that utilises this method is disclosed in claim 4.
Consecutive MPEG2 transport packets do have an equal length of 188 bytes each. Normally, equidistance can be assumed for such transport packets when originating from e.g. satellite or cable or terrestrial transmission. Advantageously it is therefore possible to capture transport stream timestamps for every Nth packet only and to merely calculate the missing timestamps. Thereby software-processing time is saved for generating the timestamps required for real-time bitstream recording.
In principle, the inventive method is suited for recording on a storage medium, or replaying from a storage medium, data packets of a transport stream which data packets belong to at least one specific program, wherein said transport stream originally includes data packets for a set of programs and wherein timestamps are assigned to the data packets of said transport stream, and wherein:

- the timestamps for some of said recorded or replayed data packets of said specific program are original timestamps of corresponding data packets of said transport stream;
- the timestamps for the remaining recorded or replayed specific program data packets are calculated using said original timestamps of said some data packets of the specific program.

Advantageous additional embodiments of the inventive method are disclosed in the respective dependent claims.
In principle the inventive apparatus is suitable for recording or replaying data packets of a transport stream which data packets belong to at least one specific program, wherein said transport stream originally includes data packets for a set of programs and wherein timestamps are assigned to the data packets of said transport stream, the apparatus including:

- means for selecting from said transport stream timestamps and data packets belonging to said specific program, wherein timestamps for some of these data packets to be recorded are original timestamps of corresponding data packets of said transport stream;
- means for calculating the timestamps for the remaining specific program data packets to be recorded, using said original timestamps of said some data packets of the specific program;
- means for assembling and recording said specific program data packets together with said original and calculated timestamps on a storage medium;
- means for replaying the recorded specific program data packets together with said original timestamps and said calculated timestamps;
- means for evaluating said original timestamps and said calculated timestamps;
- means for assembling - under control of said means for evaluating said original and calculated timestamps - the replayed specific program data packets together with said original and calculated timestamps, corresponding to their original temporal position in the original transport stream.

Advantageous additional embodiments of the inventive apparatus are disclosed in the respective dependent claims.

Drawings

Exemplary embodiments of the invention are described with reference to the accompanying drawings, which show in:

Fig. 1 simplified block diagram of consumer reception equipment including a data recorder;
Fig. 2 example of a transport stream containing data packets of four programs, and assembled data packets of one of these programs;
Fig. 3 block diagram of the signal processing part of a data stream recorder.

Exemplary embodiments

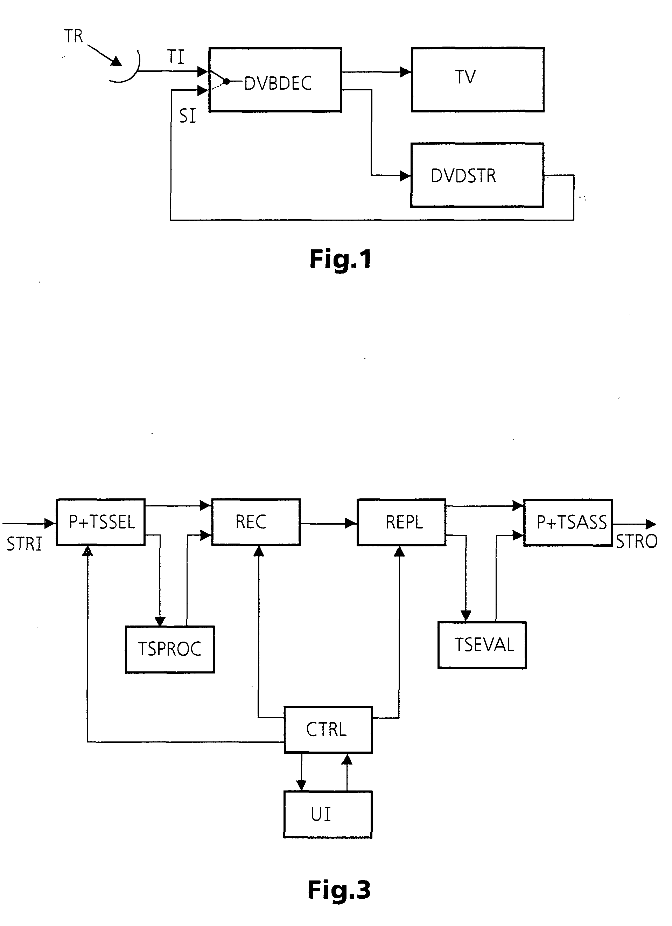

In Fig. 1 a transport stream from a transmitter TR is received at a transport stream input TI of a DVB decoder DVBDEC, e.g. a settop box. TR can be a satellite, an RF transmitter, a cable operator, a telecommunication network or any other source for a data stream with equidistant transport packets. One output of DVBDEC may be connected to a TV set or to a monitor. A further output of DVBDEC is connected to the recording input of a DVD Streamer DVDSTR or any other recorder for digital data. The replay output of DVDSTR is connected to a streamer input SI of DVBDEC. Preferably the data recorder DVDSTR does not decode the MPEG2 transport stream, but it is also possible to use a data recorder which includes MPEG2 decoding and re-encoding. In record mode, DVDSTR selects the packets for one or more programs out of the transport stream delivered by DVBDEC and assembles sector packs including for example 10 transport packets together with their packet headers, for subsequent storage. The quantity of programs that can be recorded depends on the maximum data rate of the storage device or on its maximum processing power. For real-time playback with DVDSTR each transport packet must carry its own timestamp. A timestamp is a data word having a length of e.g. 4 bytes and representing a proceeding time information. For a software implementation processing it would be very time consumptive to capture the timestamp of each transmitted transport packet because the distance between the packets is approximately 40μs only. This value results from

$$(1/\text{net\_transponder\_bitrate}) * 188\text{byte} * 8\text{bit/byte} ,$$

wherein the net_transponder_bitrate is 38.9Mbit/s .

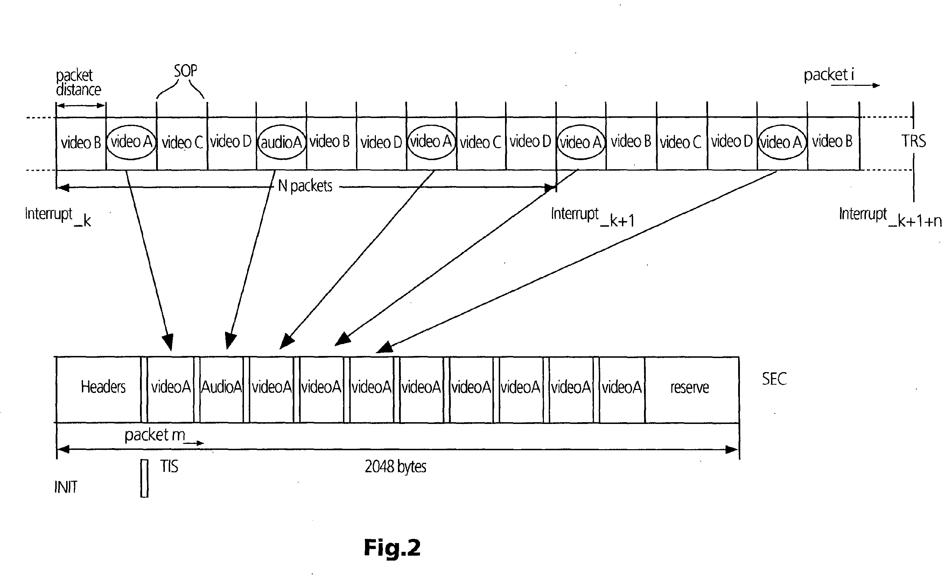

The upper part of Fig. 2 shows a transport stream TRS containing packets with video and audio data for programs A to D. Program A has been selected for the recording in DVDSTR. The begin of each MPEG2 packet is marked by a pulse 'start_of_packet' SOP which can be used to generate an interrupt signal for capturing a timestamp. For instance every Nth SOP in the transport stream is set as 'valid'. A timestamp TIS follows every SOP.
Following selection of e.g. 10 program-A transport packets from the transport stream, a sector pack SEC as shown in the bottom part of Fig. 2 is prepared for storage. A sector pack has a length of e.g. 2048 bytes and includes sector headers For replaying a correct timestamp is required for each packet of a sector. Therefore a timestamp for each packet of a sector needs to be recorded. Corresponding sector packet timestamps TIS can be calculated from the transport stream timestamps occurring at time instants $t_{\text{interrupt\_k}}$ and $t_{\text{interrupt\_k+1}}$ in the following way:

$$\text{sector\_packet\_timestamp m} = (\text{transport\_packet\_number i} * \text{transport\_packet\_distance}) + \text{initial\_time}$$

wherein

transport_packet_distance=$(t_{\text{interrupt\_k+1}} - t_{\text{interrupt\_k}})/N$; initial_time = $t_{\text{interrupt\_k}}$ ;
N = quantity of transport packets between $t_{\text{interrupt\_k}}$ and $t_{\text{interrupt\_k+1}}$ , N can be fixed or can be variable;
M = quantity of selected transport packets between $t_{\text{interrupt\_k}}$ and $t_{\text{interrupt\_k+1}}$ ;
sector packet No. m refers to the corresponding source packet No. i in the transport stream, i are values out of the range 0 ... N-1, m = 0 ... M-1.

If N is variable a corresponding value information can be recorded, too.

As an alternative, it is also possible to store when recording only the $t_{interrupt\_x}$ timestamps and information about the number of intermediate packets of the other programs of the transport stream and the number of packets between the interrupts, and to calculate the missing sector packet time stamps when replaying.

In both embodiments the replayed sector packets are output from DVDSTR corresponding to the temporal position as depicted in the upper part of Fig. 2. The result is a transport stream in which the transport packets of the other programs are missing.

DVD Streamer DVDSTR may contain the following stages: The data stream recorder input signal STRI passes through a packet and timestamp selector P+TSSEL, a recording stage REC, a replay stage REPL and a packet and a timestamp assembling stage P+TSASS that provides the data stream recorder output signal STRO.

Stage P+TSSEL selects the packets carrying program A from the transport stream, and the transport stream timestamps occurring at time instants $t_{interrupt\_k}$ and $t_{interrupt\_k+1}$. The sector_packet_time-stamps are calculated in a timestamp processing stage TSPROC from $t_{interrupt\_k}$ and $t_{interrupt\_k+1}$ using above formulas, and are fed to stage REC for recording together with the corresponding sector packets. In a timestamp evaluation stage TSEVAL the sector_packet_timestamps are evaluated from the replayed sector data, and are fed to stage P+TSASS for outputting a data stream with correct temporal position of the program A transport stream packets. P+TSSEL, REC and REPL are controlled by a controller CTRL that receives input from a user interface UI, e.g. the control keys on the front surface of the Streamer device.

In this description the base for capturing timestamps and for the numbers given is a 32-bit-counter with a clock frequency of 27MHz. The numbers given can be adapted correspondingly to any other application of the invention.

The invention can be used for video and/or audio recording based on MPEG2, MPEG1, MPEG4, AC-3 or any other coding standard. For the recording optical or opto-magnetic media like DVD or magnetic media like hard disc or tape can be used.

**Claims**

1. Method for recording (REC) on a storage medium, or replaying (REPL) from a storage medium, data packets (video A, audio A) of a transport stream (TRS) which data packets belong to at least one specific program (A), wherein said transport stream originally includes data packets (video A, video C, video D, audio A) for a set of programs (A - D) and wherein timestamps (TIS) are assigned to the data packets of said transport stream, **characterised in that**:

   - the timestamps ($t_{interrupt\_k}$, $t_{interrupt\_k+1}$, ... $t_{interrupt\_k+1+n}$) for some of said recorded or replayed data packets of said specific program (A) are original timestamps of corresponding data packets of said transport stream;
   - the timestamps for the remaining recorded or replayed specific program data packets are calculated (TSPROC) using said original timestamps of said some data packets of the specific program (A).

2. Method according to claim 1, wherein the replayed specific program data packets are real-time output (STRO) corresponding to their original temporal position in the original transport stream (TRS).

3. Method according to claim 1 or 2, wherein said timestamp calculation (TSPROC) is performed for recording (REC) or is performed (TSEVAL) when replaying (REPL).

4. Apparatus for recording or replaying data packets (video A, audio A) of a transport stream (TRS) which data packets belong to at least one specific program (A), wherein said transport stream originally includes data packets (video A, video C, video D, audio A) for a set of programs (A - D) and wherein timestamps (TIS) are assigned to the data packets of said transport stream, the apparatus including:

   - means (P+TSSEL) for selecting from said transport stream timestamps and data packets belonging to said specific program (A), wherein timestamps ($t_{interrupt\_k}$, $t_{interrupt\_k+1}$, ... $t_{interrupt\_k+1+n}$) for some of these data packets to be recorded are original timestamps of corresponding data packets of said transport stream;
   - means (TSPROC) for calculating the timestamps for the remaining specific program data packets to be recorded, using said original timestamps of said some data packets of the specific program;
   - means (REC) for assembling and recording said specific program data packets together with said original and calculated timestamps on a storage medium;
   - means (REPL) for replaying the recorded specific program data packets together with said original timestamps and said calculated timestamps;

- means (TSEVAL) for evaluating said original timestamps and said calculated timestamps;
- means (P+TSASS) for assembling - under control of said means (TSEVAL) for evaluating said original and calculated timestamps - the replayed specific program data packets together with said original and calculated timestamps, corresponding to their original temporal position in the original transport stream.

5. Apparatus according to claim 4, wherein said means (P+TSASS) for assembling output a real-time transport stream.

6. Method or apparatus according to any of claims 1 to 5, wherein the original ones of said timestamps ($t_{interrupt\_k}$, $t_{interrupt\_k+1}$, ... $t_{interrupt\_k+1+n}$) of the recorded or replayed specific program data packets do have a fixed temporal distance (N) of a predetermined number of original packets in said transport stream.

7. Method or apparatus according to any of claims 1 to 6, wherein the original ones of said timestamps ($t_{interrupt\_k}$, $t_{interrupt\_k+1}$, ... $t_{interrupt\_k+1+n}$) of the recorded or replayed specific program data packets are selected (P+TSSEL) from said transport stream using start_of_packet pulses (SOP) which are set as 'valid' or 'invalid'.

8. Method or apparatus according to any of claims 1 to 7, wherein said transport stream (TRS) is an MPEG2 transport stream.

9. Method or apparatus according to any of claims 1 to 8, wherein said specific program data packets are recorded or replayed using a DVD Streamer device (DVDSTR).

10. Method or apparatus according to any of claims 1 to 9, wherein said storage medium is an optical or opto-magnetic disc or a hard disc.

**Fig.1**

**Fig.3**

EP 1 148 504 A1

packet
distance

SOP

packet i

| video B | video A | video C | video D | audioA | video B | video D | video A | video C | video D | video A | video B | video C | video D | video A | video B |

TRS

Interrupt_k

N packets

Interrupt_k+1

Interrupt_k+1+n

| Headers | videoA | AudioA | videoA | videoA | videoA | videoA | videoA | videoA | videoA | videoA | reserve |

SEC

packet m

TIS

2048 bytes

INIT

**Fig.2**

**European Patent Office**

## EUROPEAN SEARCH REPORT

Application Number

EP 01 10 7337

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | WO 98 40889 A (KONINKL PHILIPS ELECTRONICS NV ;PHILIPS NORDEN AB (SE)) 17 September 1998 (1998-09-17) * the whole document * --- | 1,4 | G11B27/30 G11B27/10 |
| A | EP 0 749 244 A (MATSUSHITA ELECTRIC IND CO LTD) 18 December 1996 (1996-12-18) * the whole document * --- | 1,4 | |
| A | EP 0 986 248 A (THOMSON BRANDT GMBH) 15 March 2000 (2000-03-15) * the whole document * --- | 1,4 | |
| A | WO 96 30905 A (PHILIPS ELECTRONICS NV ;PHILIPS NORDEN AB (SE)) 3 October 1996 (1996-10-03) * the whole document * ----- | 1,4 | |
| | | | TECHNICAL FIELDS SEARCHED (Int.Cl.7) |
| | | | G11B |

The present search report has been drawn up for all claims

| Place of search | Date of completion of the search | Examiner |
|---|---|---|
| THE HAGUE | 6 July 2001 | Mourik, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 10 7337

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2001

| Patent document cited in search report | | Publication date | Patent family member(s) | | Publication date |
|---|---|---|---|---|---|
| WO 9840889 | A | 17-09-1998 | EP | 0904585 A | 31-03-1999 |
| | | | JP | 2000511383 T | 29-08-2000 |
| | | | CN | 1219265 A | 09-06-1999 |
| | | | CN | 1219265 T | 09-06-1999 |
| | | | US | 6122123 A | 19-09-2000 |
| EP 0749244 | A | 18-12-1996 | JP | 9009217 A | 10-01-1997 |
| | | | JP | 9046376 A | 14-02-1997 |
| | | | US | 6069902 A | 30-05-2000 |
| EP 0986248 | A | 15-03-2000 | AU | 5854899 A | 27-03-2000 |
| | | | WO | 0014952 A | 16-03-2000 |
| | | | EP | 1112652 A | 04-07-2001 |
| WO 9630905 | A | 03-10-1996 | AT | 196031 T | 15-09-2000 |
| | | | DE | 69610052 D | 05-10-2000 |
| | | | DE | 69610052 T | 12-04-2001 |
| | | | EP | 0763238 A | 19-03-1997 |
| | | | ES | 2151145 T | 16-12-2000 |
| | | | JP | 10501915 T | 17-02-1998 |
| | | | US | 5953483 A | 14-09-1999 |

EPO FORM P0459

For more details about this annex : see Official Journal of the European Patent Office, No. 12/82